# EUROPEAN PATENT APPLICATION

(11) **EP 4 748 812 A1**
(43) Date of publication of application: **27.05.2026**
(21) Application number: 25211463.2
(22) Date of filing: 27.10.2025
(51) Int. Cl.: C04B 28/06, C04B 28/04, C04B 20/00, C04B 111/28

(54) **FIRE RESISTANT CONCRETE BOARDS COMPRISING XONOTLITE AND WOLLASTONITE FILLERS**

(30) Priority: 29.10.2024 EP 24209553
(71) Applicant: PRTC NV, 2830 Tisselt (BE)
(72) Inventor: BERGE, Bert, 2830 Tisselt (BE); WU, Xiao, 2830 Tisselt (BE)
(74) Representative: Etex Services NV - Etex IPSC

(57) **Abstract**

A composition and process for making fire and heat resistant board, which comprises preparing a slurry of a mixture of hydraulic cement, spherical xonotlite particles, non natural wollastonite, functional fillers/additives and reinforcing fibres with balanced water; shaping the slurry into a board by means of the sheet-forming technologies; air curing the board and drying; wherein the non natural wollastonite is recovered from waste of calcium silicate hydrate materials by calcination at <1000°C, and reused in the manufacturing process.

## Description

### TECHNICAL FIELD

The invention is related to a composition of fire and heat resistant boards for building application to a method for manufacturing such boards.

### BACKGROUND OF THE INVENTION

Calcium silicate hydrate boards, as disclosed by US 7,101,614 comprising cement binder; spherical xonotlite particles; natural acicular wollastonite, functional fillers/additives, and reinforcing fibres, have very good mechanical properties and durability in service life, while keep good performance in fire protection and high temperatures insulation, such as at above 1000°C.

The board is traditionally produced by mixing the hydraulic binder such as cement, spherical xonotlite particles made beforehand, natural acicular or needle like wollastonite, reinforcing fibers, fillers/additives, and balanced water to form a slurry. Shaping can be made by conventional process, such as Filter Pres process.

For Filter Press molding, it generally comprises a perforated molding surface over which the slurry is poured. A perforated mechanical piston, complementary in shape to the mold, compresses and slurry and dewaters it to the point where it is self-supporting. The filter press molding technique is conducted in the absence of any applied heat and under pressure sufficient only to express out water from the slurry in the filter press and to form solid articles such as pipe covering and flat board. The filter press molding technique is described in US 4,477,397.

The shaped body is further air cured and dried to constant weight.

Once dried, the final board is cut and sanded to form required dimension. This generates somewhat production wastes, i.e., cutting waste and sanding dust. A part of them can be directly recycled in the production process. However, the quantity is limited in order to keep the material performance within the product specification.

Natural acicular or needle like wollastonite, such as Nyad-G sold by Imerys, is a key ingredient. It does indeed increase strength, maintains high temperature stability and also helps to prevent cracking and improve machinability.

However, since pandemic crisis and regional conflict in red sea area, supply of the natural acicular wollastonite becomes a problem, either the mine exploration is disrupted, or the shipping cost becomes skyrocketed due to re-route via South Africa. Without this needle like wollastonite, manufacturing of these products has to be reduced or stopped.

WO2024003139 describes calcium silicate hydrate boards using synthetic wollastonite made from calcination of calcium silicate hydrate waste. The binder in this case is not cement but siliceous material and lime material which react with the surface of xonotlite spherical particles, thereby producing a matrix comprising tobermorite and/or xonotlite as binder. As the boards need to be autoclaved the production consumes high energy, takes more time and is expensive in application.

In the present invention, it was unexpected observed that using synthetic wollastonite with a hydraulic cement leads to better mechanical properties than the same composition with natural wollastonite.

### SUMMARY OF THE INVENTION

Therefore, it is an objective of the current invention to find an alternative to the natural acicular wollastonite for non-autoclaved product, to safe guide the production and increase the productivity.

Another objective is to recover wollastonite, a strategic raw material for fire and heat resistant board composition, from production waste of calcium silicate hydrate board.

Another objective is to reuse all calcium silicate hydrate production waste and stop landfilling, to improve industrial applicability of the technology and help the circular economy.

The present invention is defined in the appended independent claims. Preferred embodiments are defined in the dependent claims.
In particular, the present invention concerns a composition for a fire and heat resistant board comprising following components wherein the wt% are relative to the total amount of solids,
- 5- 40 wt% of hydraulic cement between,
- 30 -70 wt% of porous approximately spherical xonotlite particles,
- 10-50% wt% of synthetic wollastonite
- 1-5 wt% of clay below
- 0-30% wt% of functional filler,
- 0.5- 5 wt% of reinforcing fibres,
- water 10-20 times of solid content,
- 5 to 20 wt% calcium silicate hydrate waste.
The wollastonite is synthetic and is obtained by calcination of waste of calcium silicate hydrate materials at <1000°C.

The hydraulic cement is selected from Ordinary Portland Cement (OPC, including CEM I to CEM V), Calcium Aluminate Cement (CAC), Calcium Sulfoaluminate Cement (CSA), used alone or in combination.

In a preferred embodiment the composition further comprises recycled calcium silicate hydrate waste as additional filler to reuse more waste of own production. This recycled calcium silicate hydrate waste is not calcined.

In a preferred embodiment, the synthetic wollastonite has a particle size below or equal to ca 5 mm. The particle size is measured by dry sieving.

The approximately spherical xonotlite particles may contain tobermorite, preferably less than 50 %wt, preferably 20%wt of the total weight of the approximately spherical xonotlite particles.

The present invention also concerns a process for manufacturing a fire and heat resistant board comprising the following step,
(a) Prepare a slurry made by stirring the composition described here above
(b) Mold the slurry,
(c) Curing the said molded body at 20-80°C and ca 95% humidity,
(d) Dry said cured body to constant weight.

The synthetic wollastonite is obtained by calcining waste of calcium silicate hydrate material at a temperature below 1000°C. The calcium silicate hydrate material including boards, sanding dust and cutting edges.

The molding may be made by Hatcheck process, Magnani process, Flow-On Process, Spray Process and Filter Press process.

The approximately spherical xonotlite particles is prior made by hydrothermal synthesis in a stirred medium, using an aqueous lime and silica suspension, the lime suspension being obtained beforehand by hydration in the presence of 0.2 to 2 % by weight of sulphate with respect to the weight of lime, as disclosed by the WO2020152335.

The spherical xonotlite particles may contain tobermorite. The percentage of tobermorite is less than 50 wt%, preferably less than 20 wt% of the total weight of the xonotlite particles.

The synthetic wollastonite is made by traditional calcination technology such as rotary kiln at a temperature below 1000°C or flash calcination at a temperature below 1000°C, and preferably around 850°C.

The boards obtained by the process have a dry density between 250 - 1000 kg/m3.

### BRIEF DESCRIPTION OF THE FIGURES

Figure 1 shows a picture of spherical xonotlite particles used as component of the composition.
Figure 2 shows a picture of acicular wollastonite.
Figure 3 shows an example of synthetic wollastonite according to one embodiment of the present invention.

### DETAIL DESCRIPTION OF THE INVENTION

The present invention concerns a fire and heat resistant board composition comprising
- hydraulic cement between 5- 40 wt%,
- porous approximately spherical xonotlite particles above 30 -70 wt%,
- synthetic wollastonite 10-50% wt% obtained by calcination of production waste of calcium silicate hydrate board at <1000°C,
- clay 1-5 wt%,
- functional filler 0- 30%,
- reinforcing fibres 0.5- 5 wt%,
- water 10-20 times of solid content,
- balanced amount of calcium silicate hydrate waste, where total amount of solid is 100 wt%.
The wt% are relative to the total amount of the solids

The wollastonite is synthetic and is obtained by calcination of waste of calcium silicate hydrate at <1000°C. In particular embodiment the synthetic wollastonite comprises acicular crystals agglomerated in approximately spherical shape.

Although the process of transforming tobermorite and xonotlite into wollastonite is known- as described by US 3,967,974. It was surprisingly found that the synthetic wollastonite, which is not needle like by morphology, can be used to replace the natural needle like wollastonite in the composition, without any negative effect on the mechanical strength and thermal stability at high temperatures. It is believed that good affinity between the spherical xonotlite and the synthetic wollastonite agglomerates contribute to the excellent performance.

The reinforcing fibres may be organic or inorganic such as cellulose fibers, PP fibers, PVA fibers, glass fibers and basalt fibers, used alone or in combination.

In accordance with current invention, the synthetic wollastonite is made by calcination of calcium silicate hydrate waste at below 1000°C, and preferably around 850°C, when tobermorite and xonotlite transfer to beta wollastonite, as it is confirmed by X-ray diffraction analysis. The temperature higher than 1000°C can be used but has no advantages. Traditional calcination technology can be used, such as a rotary kiln or flash calcination.

The calcium silicate hydrate waste for making the synthetic wollastonite may have different density, a density below 1000 kg/m³ before calcination is preferred.

The composition of current invention may comprise recycled calcium silicate hydrate material. The recycled calcium silicate hydrate material is not calcined. However, the amount of recycled calcium silicate hydrate should not be higher than 30 wt % of the total dry weight of the composition in order to keep good performance of the current invention.

The preferred particle size of synthetic wollastonite of this invention is below or equal to ca 5 mm.

The percentage of synthetic wollastonite used in this invention is between 10 and 50 %, preferably between 10 and 35 wt.% relative to the total solid weight of the composition. In this dosage, all the production waste of the calcium silicate hydrate board can be reused, either as the synthetic wollastonite, or the recycled waste directly added to the formulation. It greatly improves industrial applicability, reduces production cost, stops land filling, and helps the circular economy.

Further the composition may optionally contain functional fillers which may be selected from light weight fillers such as expanded perlite, exfoliated vermiculite, expanded clay, foamed glass, pumice, hollow ceramic sphere of fly ashes from power plant; and endothermic fillers such as aluminium hydroxide, magnesium hydroxide, calcium hydroxide, ettringite, and their carbonates, or in combination thereof.

Clay minerals are selected among kaolinite, dickite, montmorillonite, illite and preferably bentonite.

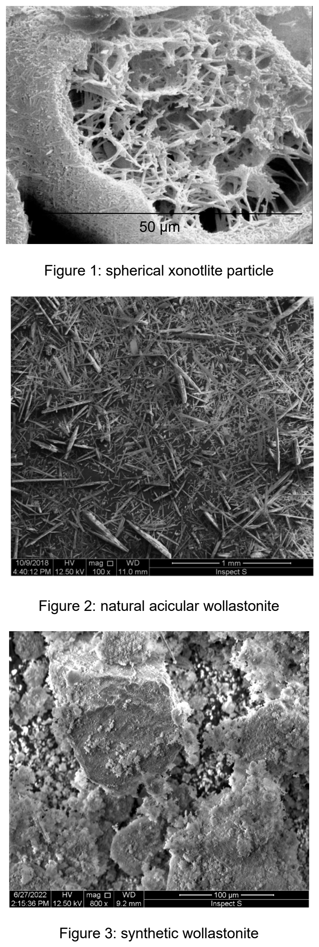

In accordance with this invention, next to the synthetic wollastonite, spherical xonotlite particles obtained by hydrothermal synthesis beforehand plays an important role. These particles surrounded by the binder indeed represent the main volume once the board is made. These agglomerated spherical particles as shown in Fig.1, impact the morphology of the synthetic wollastonite agglomerates after calcination.

In order to produce the approximately spherical xonotlite particles, an aqueous lime and silica suspension is reacted in hydrothermal condition in a stirred medium, wherein the lime suspension is obtained beforehand by hydration in the presence of 0.2 to 2 % by weight of sulfate with respect to the weight of lime as described in WO2020152335. The resulted porous xonotlite aggregates have an internal part in which the crystals are loosely entangled and distributed rather uniformly and an external layer in which the crystals are entangled more tightly than in the internal part. The said crystal aggregates advantageously have a mean diameter of between 20 and 150 microns, preferably between 40 and 80 microns, and the outer layer advantageously has a thickness of between 4 and 10 microns, preferably between 4 and 6 microns.

This invention also relates to a process for manufacturing a fire and heat resistant board comprising the following steps:
- Prepare a slurry made by stirring the composition here above described
- Mold the slurry,
- Curing said molded body at 20-80°C and ca 95% humidity,
- Dry said cured body to constant weight.

The cured body is not autoclaved.

The molding can be made by Hatcheck process, Magnani process, Flow-On Process, Spray Process or Filter Press process.

The boards in accordance with this invention has dry density at around 250-1000 kg/m³.

### EXAMPLES

Calcium silicate hydrate boards are produced according to the following procedure: all dry components shown in the Tab.1 and balanced amount of water are homogeneously mixed. Forming is by filter press. The molded body is air cured at 60°C with 95% humidity, then oven dried until constant weight.

Figure 1 shows a Scanning Electron Microscope (SEM) picture of a spherical xonotlite particle used in the examples. Figure 2 shows a SEM picture of natural wollastonite. Figure 3 shows synthetic wollastonite of current invention.

The final products were tested according to EN-norms. The bending strength was measured according to EN 12467:2012. The thermal shrinkage as well as the Loss Of Ignition (LOI%) was determined at 1000°C according to EN 1094-6: 2000.

Table 2 shows the results. They evidently demonstrate the synthetic wollastonite of this invention can replace natural acicular wollastonite without negative influence on the fire rate (Rf), mechanical strength and thermal shrinkage at high temperature, suitable for application in the fire protection and high temperature insulation.

The fire resistance-values ('Rf-values') were measured in partition conditions simulating the ISO 834-norm in an electrical kiln. In this test an ISO-heating curve is applied on one side of a board and the temperature evolution at the other side ('cold side') is registered with a K-type of thermocouple. Under exposure to the theoretical fire curve, the duration (in minutes) during which the element meets the prescribed criteria for stability, integrity (resistance to flames and smoke penetration), and thermal insulation is evaluated,

**Table 1**

| | **OPC, CEM 1 wt%** | **Bentonite wt%** | **Spherical Xonotlite wt%** | **Wollastonite wt%** | **Cellulose fibre wt%** | **Total by wt%** |
|---|---|---|---|---|---|---|
| Ref. 1 | 25,3 | 3,0 | 53.5 | 18,2 natural acicular | 1,0 | 100,0 |
| Example 1 Invention | 25,3 | 3,0 | 53.5 | 18,2 Synthetic | 1,0 | 100,0 |

**Table 2**

| | **Wollastonite (wt.%)** | **Density** | **Bending strength** | **Elastic Modulus** | **Thermal shrinkage at 950°C** | **RF** |
|---|---|---|---|---|---|---|
| | | **g/cm³** | **Mpa** | **Mpa** | | **Min.** |
| Ref 1 | commercial wollastonite (18,2) | 0,500 | 1.3 | 227 | 0.9 | 18.7 |
| Example 1 Invention | synthetic wollastonite (18,2) | 0,505 | 2.2 | 302 | 1.0 | 19.1 |

## Claims

1. Composition for a fire and heat resistant board comprising following components wherein the wt% are relative to the total amount of solids,
• 5- 40 wt% of hydraulic cement between,
• 30 -70 wt% of porous approximately spherical xonotlite particles,
• 10-50% wt% of synthetic wollastonite, said wollastonite being obtained by calcination of production waste of calcium silicate hydrate board at <1000°C,
• 1-5 wt% of clay below
• 0-30% wt% of functional filler,
• 0.5- 5 wt% of reinforcing fibres,
• water 10-20 times of solid content,
• 5 to 20 wt% calcium silicate hydrate waste.

2. Composition according to claim 1 wherein the hydraulic cement is selected from Ordinary Portland Cement (OPC including CEM I to CEM V), Calcium Aluminate Cement (CAC) and Calcium Sulfoaluminate Cement (CSA), used along or in combination.

3. Composition according to any of the previous claims wherein the composition further comprises recycled calcium silicate hydrate waste as additional filler.

4. Composition according to any of the previous claims wherein the synthetic wollastonite is particles, preferably below or equal to ca 5 mm.

5. Composition according to any of the previous claims wherein the approximately spherical xonotlite particles comprise tobermorite preferably less than 50 % wt, preferably less 20% wt of the total weight of the approximately spherical xonotlite particles.

6. A Process for manufacturing a fire and heat resistant board comprising the following steps:
• Prepare a slurry made by stirring the composition according to any of claims 1 to 5
• Mold the slurry,
• Curing said molded body at 20-80°C and circa 95% humidity,
• Dry said cured body to constant weight.

7. Process according to claim 6 wherein molding can be made by Hatcheck process, Magnani process, Flow-On Process, Spray Process and Filter Press process.

8. Process according to any of claims 6 to 7 wherein the approximately spherical xonotlite particles is prior made by hydrothermal synthesis in a stirred medium, using an aqueous lime and silica suspension, the lime suspension being obtained beforehand by hydration in the presence of 0.2 to 2 % by weight of sulphate with respect to the weight of lime.

9. Process according to any of claims 6 to 8 wherein the approximately spherical xonotlite particles comprises tobemorite in an amount less than 50wt%, preferably less than 20wt% of the total weight of the xonotlite particles.

10. Process according to any of claims 6 to 9 wherein the synthetic wollastonite is made by traditional calcination technology such as rotary kiln at below 1000°C.

11. Process according to any of claims 6 to 10 wherein the synthetic wollastonite is made by flash calcination at below 1000°C, preferably around 850°C.

12. Process according to any of claims 7 to 11 wherein the fire and heat resistant boards have a dry density at around 250-1000 kg/m³.
